# EUROPÄISCHE PATENTSCHRIFT

(11) **EP 4 100 269 B1**
(45) Veröffentlichungstag und Bekanntmachung des Hinweises auf die Patenterteilung: **13.03.2024**
(21) Anmeldenummer: 21702426.4
(22) Anmeldetag: 26.01.2021
(51) Int. Cl.: B60H 1/00, B60H 1/32, F25B 1/10, F25B 5/02

(54) **KÄLTEMITTELKREISLAUF UND VERFAHREN ZUM BETRIEB EINES KÄLTEMITTELKREISLAUFS**
REFRIGERANT CIRCUIT AND METHOD FOR OPERATING A REFRIGERANT CIRCUIT
CIRCUIT DE RÉFRIGÉRANT ET PROCÉDÉ DE FONCTIONNEMENT D'UN CIRCUIT DE RÉFRIGÉRANT

(30) Priorität: 04.02.2020 DE 102020201348
(43) Veröffentlichungstag der Anmeldung: 14.12.2022
(73) Patentinhaber: VOLKSWAGEN AKTIENGESELLSCHAFT, 38440 Wolfsburg (DE)
(72) Erfinder: WESTHÄUSER, Jochen, 38102 Braunschweig (DE); ALBRECHT, Jan-Christoph, 38442 Wolfsburg (DE); WACHSMUTH, Carsten, 38179 Schwülper (Lagesbüttel) (DE)
(86) Internationale Anmeldenummer: PCT/EP2021/051706
(87) Internationale Veröffentlichungsnummer: WO 2021/156100

(56) Entgegenhaltungen:
- EP-A1- 2 933 584
- EP-B1- 2 933 584
- WO-A1-2019/082570
- DE-A1-102018 105 609
- FR-A1- 3 069 049

## Beschreibung

Die vorliegende Erfindung ist auf einen Kältemittelkreislauf und auf ein Verfahren zum Betrieb eines Kältemittelkreislaufs gerichtet. Der Kältemittelkreislauf umfasst insbesondere zumindest einen Verdichter zum Verdichten eines Kältemittels, einen Kondensator zum Abkühlen und Verflüssigen des verdichteten Kältemittels und mindestens einen Verdampfer zum Rücküberführen des verflüssigten Kältemittels in den gasförmigen Zustand. Der mindestens eine Verdampfer wird zum Abkühlen von Fluidströmungen oder von Komponenten eingesetzt. Das Kältemittel durchströmt den Kältemittelkreislauf ausgehend von dem Verdichter über den Kondensator und den mindestens einen Verdampfer zurück zum Verdichter. Der Kältemittelkreislauf ist insbesondere in einem Kraftfahrzeug eingesetzt.

Bei Kraftfahrzeugen mit Traktionsantrieb wird die elektrische Energie zur Verfügung stellende Batterie gekühlt bzw. temperiert. Das Geräusch eines Klimageräts, das zur Temperierung eines Innenraums des Kraftfahrzeuges eingesetzt wird, ist vor allem bei derartigen Kraftfahrzeugen mit Traktionsantrieb bei hohen Außentemperaturen dauerhaft wahrnehmbar. Zur Reduzierung eines Lüftergeräusches des Klimageräts bei Aufrechterhaltung der Kälteleistung muss die Zulufttemperatur gesenkt werden. Dies kann durch die Verwendung eines weiteren Verdampfers erreicht werden, der die Temperatur der dem Innenraum zugeführten Luft weiter absenkt, insbesondere auf unter null Grad Celsius.

Es ist bekannt, eine Batterie über einen Kühlmittelkreis zu kühlen, bei dem das Kühlmittel über das Klimagerät gekühlt wird. Es ist auch bekannt, die Verdampfertemperatur auf unter null Grad Celsius abzusenken, wobei die Luft in einer Entfeuchtungsstufe bereits auf 2 Grad Celsius vorgekühlt wird.

In beiden Fällen ist die Effizienz und Leistung des Kältemittelkreislaufs nicht optimal. In beiden Fällen liegen verschiedene Temperaturniveaus vor, die durch den Kältemittelkreis bereitzustellen sind. Die Batterie sollte z. B. auf ca. 20 Grad Celsius temperiert werden. Das Klimagerät sollte die Luft auf ca. zwei Grad Celsius temperieren. Soll das Lüftergeräusch weiter reduziert werden, ist eine Abkühlung der Luft auf ca. -10 Grad Celsius erforderlich. Dies führt dazu, dass sich ein Druckniveau an einer Saugseite eines Verdichters des Kältemittelkreises an dem niedrigsten Temperaturniveau orientiert und der Verdichter damit mehr Energie benötigt, als es bei einem höheren Temperaturniveau erforderlich wäre.

Aus der DE 10 2013 204 188 A1 ist ein Kältemittelkreis eines Kraftfahrzeuges bekannt. Der Kältemittelkreis umfasst einen Verdichter, einen Kondensator, einen Wärmeübertrager sowie einen oder mehrere Verdampfer. Der Verdichter kann ein zweistufiger Verdichter sein, dem noch nicht verflüssigtes Kältemittel dem Mitteldruckbereich des Verdichters wieder zugeführt wird.

Aus der DE 10 2011 118 162 A1 ist eine kombinierte Kälteanlage und Wärmepumpe bekannt.

Dabei soll eine optimale Kältemittelmenge stets eingehalten und eine Verlagerung von Kältemittel vermieden werden.

Aus der DE 10 2009 030 041 A1 ist ein Fahrzeug-Klimasystem mit einem Kühlmittelkreislauf bekannt. In einem Hochdruckzweig stromabwärts eines Kompressors sind nacheinander ein Kondensator und mehrere Verdampfer angeordnet. Jeder Verdampfer wird über eine Expansionsvorrichtung mit einem Kühlmittel beaufschlagt. In dem Hochdruckzweig ist ein einziges Überdruckventil angeordnet. Über das Überdruckventil kann ein Überdruck in dem Hochdruckzweig an den Niederdruckzweig abgeführt werden.

Aus der DE 10 2018 105 609 A1 ist ein Verfahren zur Kühlung in einem Fahrzeug bekannt. Aus der EP 2 933 584 A1 ist ein Kältemittelkreislauf bekannt.

Aus der WO 2019/082570 A1 ist ein Heizmanagementsystem für ein Kraftfahrzeug bekannt.

Aus der FR 3 069 049 A1 ist ein Klimaanlagensystem für ein Kraftfahrzeug bekannt.

Aufgabe der vorliegenden Erfindung ist es, die mit Bezug auf den Stand der Technik angeführten Probleme zumindest teilweise zu lösen. Insbesondere soll ein Kältemittelkreislauf vorgeschlagen werden, der energieeffizient betrieben werden kann. Weiter soll ein Verfahren zum Betrieb eines Kältemittelkreislaufs vorgeschlagen werden, mit dem ein energieeffizienter Betrieb des Kältemittelkreislaufs durchgeführt werden kann.

Zur Lösung dieser Aufgaben trägt ein Kältemittelkreislauf mit den Merkmalen gemäß Patentanspruch 1 und ein Verfahren mit den Merkmalen gemäß Patentanspruch 4 bei.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Kältemittelkreislauf vorgeschlagen, zumindest umfassend einen Verdichter mit einer stromaufwärtigen Saugseite und einer stromabwärtigen Druckseite, einen Kondensator, einen ersten Verdampfer und zumindest einen zweiten Verdampfer. Der Verdichter ist ein zumindest zweistufiger Verdichter, der an der Saugseite eine erste Zuleitung hin zu einer ersten Stufe des Verdichters mit einem ersten Druckniveau und eine zweite Zuleitung hin zu einer zweiten Stufe des Verdichters mit einem zweiten Druckniveau aufweist. Das zweite Druckniveau ist höher als das erste Druckniveau. Der erste Verdampfer und der zweite Verdampfer zumindest sind zeitweise über voneinander unterschiedliche Zuleitungen mit dem Verdichter verbindbar.

Der Verdichter dient insbesondere der Verdichtung eines gasförmigen Kältemittels, z. B. Kohlendioxid, auf einen höheren Druck. Dabei wird über den Verdichter der an der Saugseite vorliegende Druck auf einen an der Druckseite des Verdichters vorliegenden Druck erhöht. Der Verdichter umfasst insbesondere mindestens zwei Stufen, d. h. der an der Saugseite vorliegende Druck kann unterschiedlich sein. Dafür sind unterschiedliche Zuleitungen vorgesehen, über die das Kältemittel dem Verdichter zugeführt wird. Die erste Zuleitung weist ein geringeres Druckniveau auf, d. h. der hier in der ersten Zuleitung vorliegende Druck ist regelmäßig geringer als der in der zweiten Zuleitung vorliegende Druck des Kältemittels. Das aus der ersten Zuleitung dem Verdichter zugeführte Kältemittel wird durch den Verdichter insbesondere auf den Druck der Druckseite verdichtet, d. h. hier liegt die höchste Druckdifferenz zwischen der Druckseite und der Saugseite, hier der ersten Zuleitung, vor.

Die zweite Zuleitung weist ein höheres Druckniveau auf, d. h. der hier in der zweiten Zuleitung vorliegende Druck ist regelmäßig höher als der in der ersten Zuleitung vorliegende Druck des Kältemittels. Das aus der zweiten Zuleitung dem Verdichter zugeführte Kältemittel wird durch den Verdichter auf den Druck der Druckseite verdichtet, d. h. die Druckdifferenz zwischen der Druckseite und der Saugseite, hier der zweiten Zuleitung, ist geringer.

Der Kältemittelkreislauf ist insbesondere für den Betrieb mit Kältemittel und den hier angegebenen Drücken bzw. Druckdifferenzen eingerichtet.

Das zweite Druckniveau ist insbesondere um mindestens 10 %, bevorzugt um mindestens 20 %, besonders bevorzugt um mindestens 30 %, des zweiten Druckniveaus höher als das erste Druckniveau.

Das Kältemittel wird auf der Druckseite insbesondere auf einen gemeinsamen Druck verdichtet, d. h. das Kältemittel aus den Zuleitungen wird über insbesondere eine gemeinsame Leitung hin zum Kondensator weitergeführt.

Das verdichtete Kältemittel wird über den Kondensator insbesondere abgekühlt und zumindest teilweise verflüssigt. Die Abkühlung erfolgt insbesondere über eine Wärmeübertragung mit Umgebungsluft. Der Kondensator kann auch als Gaskühler vorgesehen sein, wobei dabei das Kältemittel ohne Phasenwechsel abgekühlt wird.

Das zumindest teilweise verflüssigte Kältemittel wird zumindest einem Verdampfer zugeführt. In einem Verdampfer wird das verflüssigte Kältemittel auf einen geringeren Druck entspannt und zumindest teilweise in einen gasförmigen Zustand überführt.

Das zumindest teilweise gasförmige Kältemittel wird über die Zuleitungen dem Verdichter zugeführt.

Stromaufwärts der Verdampfer ist, insbesondere für jeden Verdampfer separat, eine Expansionseinrichtung angeordnet, über die das zumindest teilweise verflüssigte Kältemittel entspannt und zumindest teilweise in den gasförmigen Zustand überführt wird.

Insbesondere ist stromabwärts und/oder stromaufwärts der Verdampfer, insbesondere für jeden Verdampfer separat, eine Absperreinrichtung angeordnet, über die ein Volumenstrom des Kältemittels über den Verdampfer regelbar ist. Eine Absperreinrichtung kann z. B. einem Expansionsventil realisiert sein, wobei ein Expansionsventil einem Verdampfer zugeordnet und stromaufwärts davon angeordnet ist.

In den Verdampfern erfolgt eine Wärmeübertragung zwischen einem Fluid und dem Kältemittel, so dass das Fluid über das Kältemittel abgekühlt werden kann.

Erfindungsgemäß ist der erste Verdampfer zur Kühlung einer Batterie und der zweite Verdampfer zur Kühlung von Luft eingesetzt. Alternativ können beide Verdampfer zur Kühlung von Luft eingesetzt werden.

Die Batterie ist insbesondere ein Stromspeicher für einen Traktionsantrieb eines Kraftfahrzeuges. Die Luft ist insbesondere Umgebungsluft, die z. B. einem Innenraum eines Kraftfahrzeuges zugeführt wird.

Die abgekühlte Umgebungsluft kann z. B. zur Temperierung eines Fahrgastraums oder mindestens eines Transportraums verwendet werden. In einem Transportraum können insbesondere Güter transportiert werden, die mit einer vorbestimmten Temperatur zu temperieren sind, z. B. Fleisch bei ca. 2 Grad Celsius, Tiefkühlprodukte bei ca. -15 Grad Celsius, etc. Ggf. sind mehrere Transporträume vorgesehen, die unterschiedlich temperiert werden müssen.

Insbesondere werden die Verdampfer für voneinander unterschiedliche Temperaturniveaus eingesetzt. Die Temperaturniveaus unterscheiden sich insbesondere um mindestens 5 Kelvin voneinander, bevorzugt um mindestens 10 Kelvin. Z. B. ist der zur Kühlung der Batterie vorgesehene erste Verdampfer zur Temperierung der Batterie auf ca. 20 Grad Celsius eingerichtet. Der zur Kühlung der Luft vorgesehene zweite Verdampfer ist z. B. zur Temperierung der Luft auf 2 Grad Celsius oder -15 Grad Celsius eingerichtet.

Es wird hier insbesondere vorgeschlagen, dass die Verdampfer über zumindest zeitweise unterschiedliche Zuleitungen mit dem Verdichter verbindbar sind. Damit können die Verdampfer mit den unterschiedlichen Druckniveaus an der Saugseite des Verdichters verbunden werden. Damit kann ein effizienter Betrieb des Kältemittelkreislaufs realisiert werden, da für jeden Verdampfer unterschiedliche Kühlleistungen bereitgestellt werden können.

Insbesondere sind die Verdampfer zueinander parallel geschaltet. Insbesondere sind die Verdampfer zwischen dem Kondensator und dem Verdichter zueinander parallel geschaltet.

Erfindungsgemäß sind in einem ersten Betriebszustand des Kältemittelkreislaufs der erste Verdampfer über die zweite Zuleitung und der zweite Verdampfer über die erste Zuleitung mit dem Verdichter verbunden.

Insbesondere besteht in dem ersten Betriebszustand z. B. ein Kühlbedarf für die Batterie und für die Umgebungsluft. Das niedrigste Temperaturniveau liegt dann z. B. an dem zur Kühlung der Umgebungsluft vorgesehenen zweiten Verdampfer vor, z. B. zur Temperierung der Luft auf ca. 2 Grad Celsius, wobei die Batterie über den ersten Verdampfer z. B. auf ca. 20 Grad Celsius temperiert werden soll. Der zweite Verdampfer wird dann über die erste Zuleitung mit dem Verdichter verbunden, so dass der zweite Verdampfer über das geringere erste Druckniveau mit dem Verdichter verbunden ist.

Erfindungsgemäß umfasst der Kältemittelkreislauf einen dritten Verdampfer, der zur weiteren Abkühlung der von dem zweiten Verdampfer gekühlten Luft eingesetzt ist. Insbesondere wird über den dritten Verdampfer die Luft weiter abgekühlt, z. B. auf ein Temperaturniveau, das mindestens 5 Kelvin, bevorzugt mindestens 10 Kelvin, geringer ist, als das Temperaturniveau, für das der zweite Verdampfer eingerichtet ist. Insbesondere wird die Luft über den dritten Verdampfer auf -10 Grad Celsius oder sogar auf -15 Grad Celsius oder weniger abgekühlt.

Erfindungsgemäß sind in einem zweiten Betriebszustand des Kältemittelkreislaufs nur der zweite Verdampfer über die zweite Zuleitung und der dritte Verdampfer über die erste Zuleitung mit dem Verdichter verbunden.

Erfindungsgemäß wird in dem zweiten Betriebszustand der erste Verdampfer nicht mit dem Kältemittel beaufschlagt.

Das niedrigste Temperaturniveau liegt dabei an dem dritten Verdampfer vor, so dass dieser über die erste Zuleitung und das geringere erste Druckniveau mit dem Verdichter verbunden wird.

Erfindungsgemäß sind in einem dritten Betriebszustand des Kältemittelkreislaufs der erste Verdampfer und der zweite Verdampfer über die zweite Zuleitung und der dritte Verdampfer über die erste Zuleitung mit dem Verdichter verbunden.

In dem dritten Betriebszustand liegt ein Kühlbedarf an allen Verdampfern vor. Hier muss dann ein Druckniveau der Saugseite insbesondere für unterschiedliche Temperaturniveaus der Verdampfer eingesetzt werden. Dabei wird die Effizienz und Leistung des Kältemittelkreislaufs reduziert, da die Druckniveaus in den Verdampfern nicht an die Temperaturniveaus bzw. Temperaturanforderung der Verdampfer angepasst werden kann.

Ein möglichst effizienter Betrieb des Kältemittelkreislaufs wird dabei über die Verbindung des ersten Verdampfers und des zweiten Verdampfers mit der zweiten Zuleitung erreicht, wobei der dritte Verdampfer über die erste Zuleitung mit dem Verdichter verbunden ist.

Insbesondere ist bei der Verbindung eines Verdampfers mit der jeweiligen Zuleitung bzw. dem dort vorliegenden Druckniveau der Saugseite die Leistungsanforderung des jeweiligen Verdampfers zu berücksichtigen. Weiter kann die Verbindung des Verdampfers mit der jeweiligen Zuleitung anhand einer vorgebbaren Priorisierung durchgeführt werden. Z. B. sollte eine Sicherstellung einer vorbestimmten Temperatur in einem Transportraum eines Kraftfahrzeuges eine möglichst hohe Priorität aufweisen, so dass der dafür vorgesehene mindestens eine Verdampfer dann über die erste Zuleitung mit dem Verdichter verbunden ist. Zur Sicherstellung der Fahrbereitschaft eines Kraftfahrzeuges sollte eine ausreichende Batteriekühlung sichergestellt werden, so dass der dafür vorgesehene Verdampfer ebenfalls mit einer hohen, ggf. aber nicht der höchsten, Priorität betrieben wird. Eine Kühlung von Luft zur Temperierung eines Fahrgastraums kann z. B. mit einer geringen Priorität erfolgen. Insbesondere kann, wenn in einem Betriebspunkt die jeweils angeforderte Kälteleistung bereitgestellt wurde, der Betrieb des Kältemittelkreislaufs dann unter Berücksichtigung der Energieeffizienz erfolgen.

Insbesondere sind der zweite Verdampfer und der dritte Verdampfer zueinander parallel geschaltet und jeweils mit dem Verdichter über jede der ersten Zuleitung und der zweiten Zuleitung schaltbar verbindbar.

Insbesondere ist zumindest einer der Verdampfer ausschließlich über eine Zuleitung mit dem Verdichter verbindbar. Insbesondere ist nur der erste Verdampfer ausschließlich über die zweite Zuleitung mit dem Verdichter verbindbar.

Es wird weiter ein Verfahren zum Betrieb eines Kältemittelkreislaufs gemäß Anspruch 4 vorgeschlagen, zum Betrieb des bereits beschriebenen Kältemittelkreislaufs. Der Kältemittelkreislauf weist zumindest einen Verdichter mit einer stromaufwärtigen Saugseite und einer stromabwärtigen Druckseite, einen Kondensator, einen ersten Verdampfer und zumindest einen zweiten Verdampfer auf. Der Verdichter ist ein zumindest zweistufiger Verdichter, der an der Saugseite eine erste Zuleitung hin zu einer ersten Stufe des Verdichters mit einem ersten Druckniveau und eine zweite Zuleitung hin zu einer zweiten Stufe des Verdichters mit einem zweiten Druckniveau aufweist, wobei das zweite Druckniveau höher ist als das erste Druckniveau. Der Kältemittelkreislauf wird zumindest in einem ersten Betriebszustand betrieben, in dem der erste Verdampfer und der zweite Verdampfer zumindest zeitweise über voneinander unterschiedliche Zuleitungen mit dem Verdichter verbunden sind.

Es wird hier insbesondere vorgeschlagen, dass die Verdampfer über zumindest zeitweise unterschiedliche Zuleitungen mit dem Verdichter verbindbar sind. Damit können die Verdampfer mit den unterschiedlichen Druckniveaus an der Saugseite des Verdichters verbunden werden. Damit kann ein effizienter Betrieb des Kältemittelkreislaufs realisiert werden, da für jeden Verdampfer unterschiedliche Kühlleistungen bereitgestellt werden können.

Das Verfahren wird insbesondere mit einem Steuergerät ausgeführt. Das Steuergerät ist zur Durchführung des Verfahrens ausgestattet, konfiguriert oder programmiert. Über das Steuergerät ist insbesondere der jeweilige Kühlbedarf an mindestens einem Verdampfer, insbesondere an allen Verdampfern, ermittelbar und die Verschaltung des Kältemittelkreislaufs steuerbar.

Insbesondere wird der Kältemittelkreislauf so betrieben und/oder das Verfahren so durchgeführt, dass möglichst wenig Energie dabei verbraucht wird, dass also ein möglichst energieeffizienter Betrieb des Kältemittelkreislaufs ermöglicht wird.

Weiter kann das Verfahren auch von einem Computer bzw. mit einem Prozessor einer Steuereinheit ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens durchführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil des vorgeschlagenen Verfahrens auszuführen.

Es wird weiter ein Kraftfahrzeug gemäß Anspruch 5 vorgeschlagen, zumindest umfassend einen Traktionsantrieb und eine Batterie, in der elektrische Energie zum Antrieb des Traktionsantriebs speicherbar ist, sowie den beschriebenen Kältemittelkreislauf, wobei der erste Verdampfer zur Kühlung der Batterie geeignet ausgeführt ist.

Insbesondere weist das Kraftfahrzeug ein Steuergerät auf, das zur Durchführung des Verfahrens ausgestattet, konfiguriert oder programmiert ist.

Die Ausführungen zu dem Kältemittelkreislauf sind insbesondere auf das Verfahren und/oder das Kraftfahrzeug und/oder das computerimplementierte Verfahren (also den Computer bzw. den Prozessor, das System zur Datenverarbeitung, das computerlesbare Speichermedium) übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist darauf hinzuweisen, dass die Figuren und insbesondere die dargestellten Größenverhältnisse nur schematisch sind. Es zeigen:
- Fig. 1:: ein Kraftfahrzeug mit einem Kältemittelkreislauf, der gemäß einem ersten Betriebszustand betrieben wird;
- Fig. 2:: den Kältemittelkreislauf nach Fig. 1, der gemäß einem zweiten Betriebszustand betrieben wird; und
- Fig. 3:: den Kältemittelkreislauf nach Fig. 1 und 2, der gemäß einem dritten Betriebszustand betrieben wird.

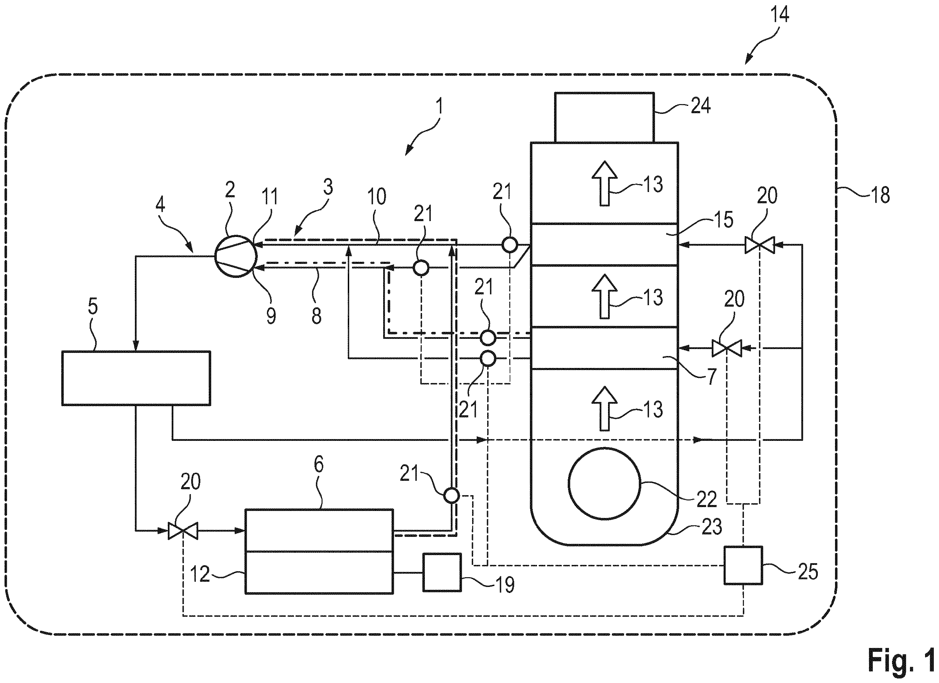

Die Fig. 1 zeigt ein Kraftfahrzeug 18 mit einem Kältemittelkreislauf 1, der gemäß einem ersten Betriebszustand 14 betrieben wird. Das Kraftfahrzeug 18 umfasst einen Traktionsantrieb 19 und eine Batterie 12, in der elektrische Energie zum Antrieb des Traktionsantriebs 19 speicherbar ist. Der Kältemittelkreislauf 1 umfasst einen Verdichter 2 mit einer stromaufwärtigen Saugseite 3 und einer stromabwärtigen Druckseite 4, einen Kondensator 5, einen ersten Verdampfer 6, einen zweiten Verdampfer 7 sowie einen dritten Verdampfer 15. Der Verdichter 2 ist ein zweistufiger Verdichter, der an der Saugseite 3 eine erste Zuleitung 8 hin zu einer ersten Stufe 9 des Verdichters 2 mit einem ersten Druckniveau und eine zweite Zuleitung 10 hin zu einer zweiten Stufe 11 des Verdichters 2 mit einem zweiten Druckniveau aufweist. Das zweite Druckniveau ist höher ist als das erste Druckniveau.

Der erste Verdampfer 6 ist zur Kühlung der Batterie 12 und der zweite Verdampfer 7 zur Kühlung von Luft 13 eingesetzt. Der dritte Verdampfer 15 ist zur weiteren Abkühlung der Luft 13 vorgesehen.

Die Verdampfer 6, 7, 15 werden für voneinander unterschiedliche Temperaturniveaus eingesetzt. Der zur Kühlung der Batterie 12 vorgesehene erste Verdampfer 6 ist zur Temperierung der Batterie 12 auf ca. 20 Grad Celsius eingerichtet. Der zur Kühlung der Luft 13 vorgesehene zweite Verdampfer 7 ist zur Temperierung der Luft 13 auf 2 Grad Celsius und der dritte Verdampfer 15 zur Temperierung der Luft auf -15 Grad Celsius eingerichtet.

Die Luft 13 wird in einem Klimagerät 23 über ein Gebläse 22 angetrieben und über die Verdampfer 7, 15 hin zum einem Innenraum 24 des Kraftfahrzeuges 18 geführt.

Die Verdampfer 6, 7, 15 können über zumindest zeitweise unterschiedliche Zuleitungen 8, 10 mit dem Verdichter 2 verbunden sein. Damit können die Verdampfer 6, 7, 15 mit den unterschiedlichen Druckniveaus an der Saugseite 3 des Verdichters 2 verbunden werden. Damit kann ein effizienter Betrieb des Kältemittelkreislaufs 1 realisiert werden, da für jeden Verdampfer 6, 7, 15 unterschiedliche Kühlleistungen bereitgestellt werden können.

Die Verdampfer 6, 7, 15 sind zueinander parallel geschaltet.

Stromaufwärts jedes Verdampfers 6, 7, 15 ist eine Expansionseinrichtung 20 angeordnet, über die das in dem Kondensator 5 zumindest teilweise verflüssigte Kältemittel entspannt und zumindest teilweise in den gasförmigen Zustand überführt wird.

Stromabwärts jedes Verdampfers 6, 7, 15 ist jeweils mindestens eine Absperreinrichtung 21 angeordnet, über die ein Volumenstrom des Kältemittels über den jeweiligen Verdampfer 6, 7, 15 regelbar ist.

Das Kraftfahrzeug 18 weist ein Steuergerät 25 auf. Das Steuergerät 25 ist zur Durchführung des Verfahrens ausgestattet, konfiguriert oder programmiert. Über das Steuergerät 25 ist der jeweilige Kühlbedarf an den Verdampfern 6, 7, 15 ermittelbar und die Verschaltung des Kältemittelkreislaufs 1, d. h. die Verbindung des jeweiligen Verdampfers 6, 7, 15 mit entweder der ersten Zuleitung 8 oder der zweiten Zuleitung 10 steuerbar. Über das Steuergerät 25 sind die Absperreinrichtungen 21 und ggf. die Expansionseinrichtungen 20 ansteuerbar.

In einem ersten Betriebszustand 14 des Kältemittelkreislaufs 1 sind der erste Verdampfer 6 über die zweite Zuleitung 10 und der zweite Verdampfer 7 über die erste Zuleitung 8 mit dem Verdichter 2 verbunden. Der dritte Verdampfer 15 wird hier nicht mit dem Kältemittel beaufschlagt.

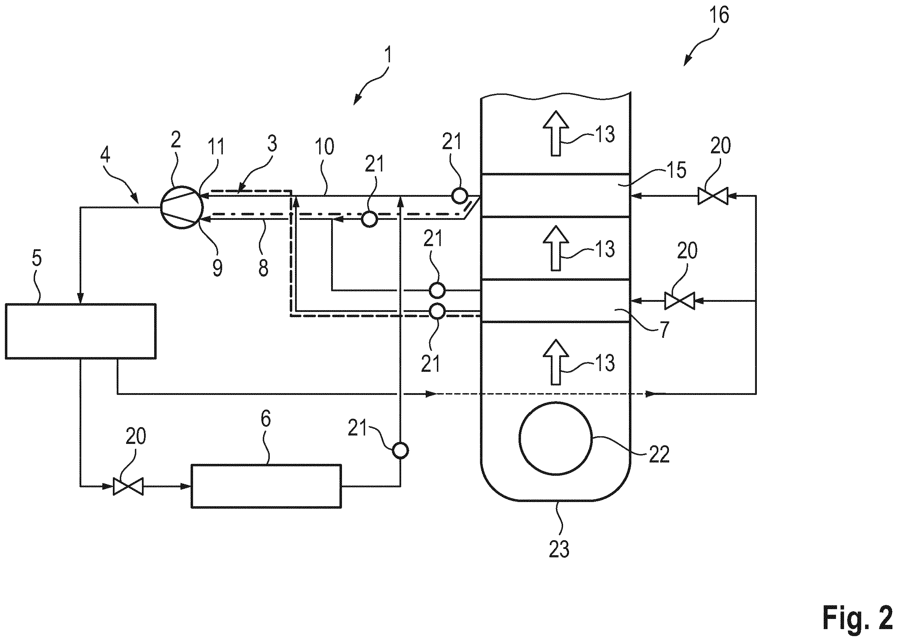

Fig. 2 zeigt den Kältemittelkreislauf 1 nach Fig. 1, der gemäß einem zweiten Betriebszustand 16 betrieben wird. Auf die Ausführungen zu Fig. 1 wird Bezug genommen.

In dem zweiten Betriebszustand 16 des Kältemittelkreislaufs 1 sind nur der zweite Verdampfer 7 über die zweite Zuleitung 10 und der dritte Verdampfer 15 über die erste Zuleitung 8 mit dem Verdichter 2 verbunden.

In dem zweiten Betriebszustand 16 wird der erste Verdampfer 6 nicht mit dem Kältemittel beaufschlagt.

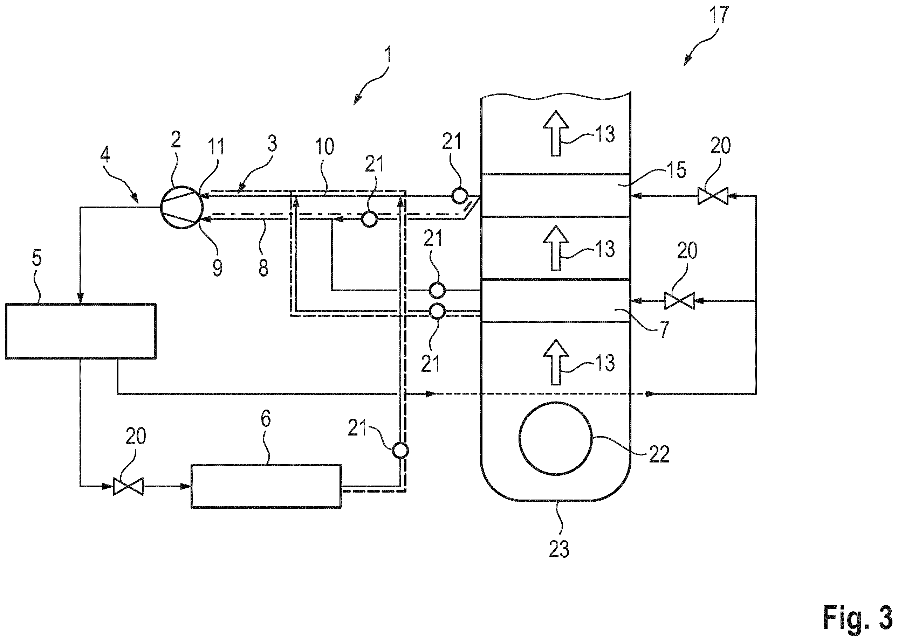

Fig. 3 zeigt den Kältemittelkreislauf 1 nach Fig. 1 und 2, der gemäß einem dritten Betriebszustand 17 betrieben wird. Auf die Ausführungen zu Fig. 1 und Fig. 2 wird Bezug genommen.

In dem dritten Betriebszustand 17 des Kältemittelkreislaufs 1 sind der erste Verdampfer 6 und der zweite Verdampfer 7 über die zweite Zuleitung 10 und der dritte Verdampfer 15 über die erste Zuleitung 8 mit dem Verdichter 2 verbunden.

In dem dritten Betriebszustand 17 liegt ein Kühlbedarf an allen Verdampfern 6, 7, 15 vor. Hier muss das zweite Druckniveau der Saugseite 3 für die unterschiedlichen Temperaturniveaus des ersten Verdampfers 6 und des zweiten Verdampfers 7 eingesetzt werden. Dabei wird die Effizienz und Leistung des Kältemittelkreislaufs 1 reduziert, da die Druckniveaus in den Verdampfern 6, 7 nicht an die Temperaturniveaus bzw. Temperaturanforderung der Verdampfer 6, 7 angepasst werden kann. Ein möglichst effizienter Betrieb des Kältemittelkreislaufs 1 wird dabei über die Verbindung des ersten Verdampfers 6 und des zweiten Verdampfers 7 mit der zweiten Zuleitung 10 erreicht, wobei der dritte Verdampfer 15 über die erste Zuleitung 8 mit dem Verdichter 2 verbunden ist.

### Bezugszeichenliste

- 1: Kältemittelkreislauf
- 2: Verdichter
- 3: Saugseite
- 4: Druckseite
- 5: Kondensator
- 6: erster Verdampfer
- 7: zweiter Verdampfer
- 8: erste Zuleitung
- 9: erste Stufe
- 10: zweite Zuleitung
- 11: zweite Stufe
- 12: Batterie
- 13: Luft
- 14: erster Betriebszustand
- 15: dritter Verdampfer
- 16: zweiter Betriebszustand
- 17: dritter Betriebszustand
- 18: Kraftfahrzeug
- 19: Traktionsantrieb
- 20: Expansionseinrichtung
- 21: Absperreinrichtung
- 22: Gebläse
- 23: Klimagerät
- 24: Innenraum
- 25: Steuergerät

## Patentansprüche

1. Kältemittelkreislauf (1), zumindest umfassend einen Verdichter (2) mit einer stromaufwärtigen Saugseite (3) und einer stromabwärtigen Druckseite (4), einen Kondensator (5), einen ersten Verdampfer (6) und zumindest einen zweiten Verdampfer (7); wobei der Verdichter (2) ein zumindest zweistufiger Verdichter ist, der an der Saugseite (3) eine erste Zuleitung (8) hin zu einer ersten Stufe (9) des Verdichters (2) mit einem ersten Druckniveau und eine zweite Zuleitung (10) hin zu einer zweiten Stufe (11) des Verdichters (2) mit einem zweiten Druckniveau aufweist, wobei das zweite Druckniveau höher ist als das erste Druckniveau; wobei der erste Verdampfer (6) und der zweite Verdampfer (7) zumindest zeitweise über voneinander unterschiedliche Zuleitungen (8, 10) mit dem Verdichter (2) verbindbar sind; wobei der erste Verdampfer (6) zur Kühlung einer Batterie (12) und der zweite Verdampfer (7) zur Kühlung von Luft (13) eingesetzt ist; **gekennzeichnet durch**
einen dritten Verdampfer (15), der zur weiteren Abkühlung der von dem zweiten Verdampfer (7) gekühlten Luft (13) eingesetzt ist; wobei in einem ersten Betriebszustand (14) des Kältemittelkreislaufs (1) der erste Verdampfer (6) über die zweite Zuleitung (10) und der zweite Verdampfer (7) über die erste Zuleitung (8) mit dem Verdichter (2) verbunden sind; wobei in einem zweiten Betriebszustand (16) des Kältemittelkreislaufs (1) nur der zweite Verdampfer (7) über die zweite Zuleitung (10) und der dritte Verdampfer (15) über die erste Zuleitung (8) mit dem Verdichter (2) verbunden sind und wobei in einem dritten Betriebszustand (17) des Kältemittelkreislaufs (1) der erste Verdampfer (6) und der zweite Verdampfer (7) über die zweite Zuleitung (10) und der dritte Verdampfer (15) über die erste Zuleitung (8) mit dem Verdichter (2) verbunden sind.

2. Kältemittelkreislauf (1) nach Patentanspruch 1, wobei die Verdampfer (6, 7, 15) zueinander parallel geschaltet sind.

3. Kältemittelkreislauf (1) nach einem der vorhergehenden Patentansprüche, wobei der zweite Verdampfer (7) und der dritte Verdampfer (15) zueinander parallel geschaltet sind und jeweils mit dem Verdichter (2) über jede der ersten Zuleitung (8) und der zweiten Zuleitung (10) schaltbar verbindbar sind.

4. Verfahren zum Betrieb eines Kältemittelkreislaufs (1) nach einem der vorhergehenden Patentansprüche, wobei der Kältemittelkreislauf (1) zumindest in einem ersten Betriebszustand (14) betrieben wird, in dem der erste Verdampfer (6) und der zweite Verdampfer (7) zumindest zeitweise über voneinander unterschiedliche Zuleitungen (8, 10) mit dem Verdichter (2) verbunden sind; und wobei der Kältemittelkreislauf (1) zumindest in einem zweiten Betriebszustand (16) betrieben wird, in dem nur der zweite Verdampfer (7) über die zweite Zuleitung (10) und der dritte Verdampfer (15) über die erste Zuleitung (8) mit dem Verdichter (2) verbunden sind; und wobei der Kältemittelkreislauf (1) in einem dritten Betriebszustand (17) betrieben wird, in dem der erste Verdampfer (6) und der zweite Verdampfer (7) über die zweite Zuleitung (10) und der dritte Verdampfer (15) über die erste Zuleitung (8) mit dem Verdichter (2) verbunden sind.

5. Kraftfahrzeug (18), zumindest umfassend einen Traktionsantrieb (19) und eine Batterie (12), in der elektrische Energie zum Antrieb des Traktionsantriebs (19) speicherbar ist, sowie ein Kältemittelkreislauf (1) nach einem der vorhergehenden Patentansprüche 1 bis 4, wobei der erste Verdampfer (6) zur Kühlung der Batterie (12) geeignet ausgeführt ist.

## Claims

1. Refrigerant circuit (1) at least comprising a compressor (2) with an upstream suction side (3) and with a downstream pressure side (4), a condenser (5), a first evaporator (6) and at least one second evaporator (7); wherein the compressor (2) is an at least two-stage compressor which, at the suction side (3), has a first feed line (8) to a first stage (9) of the compressor (2) with a first pressure level and has a second feed line (10) to a second stage (11) of the compressor (2) with a second pressure level, wherein the second pressure level is higher than the first pressure level; wherein the first evaporator (6) and the second evaporator (7) are connectable to the compressor (2) via mutually different feed lines (8, 10) at least at certain times; wherein the first evaporator (6) is used for cooling a battery (12) and the second evaporator (7) is used for cooling air (13); **characterized by** a third evaporator (15) which is used for further cooling of the air (13) cooled by the second evaporator (7); wherein, in a first operating state (14) of the refrigerant circuit (1), the first evaporator (6), via the second feed line (10), and the second evaporator (7), via the first feed line (8), are connected to the compressor (2); wherein, in a second operating state (16) of the refrigerant circuit (1), only the second evaporator (7), via the second feed line (10), and the third evaporator (15), via the first feed line (8), are connected to the compressor (2); and wherein, in a third operating state (17) of the refrigerant circuit (1), the first evaporator (6) and the second evaporator (7), via the second feed line (10), and the third evaporator (15), via the first feed line (8), are connected to the compressor (2).

2. Refrigerant circuit (1) according to Patent Claim 1, wherein the evaporators (6, 7, 15) are connected in parallel with respect to one another.

3. Refrigerant circuit (1) according to either of the preceding patent claims, wherein the second evaporator (7) and the third evaporator (15) are connected in parallel with respect to one another and are each switchably connectable to the compressor (2) via each of the first feed line (8) and the second feed line (10).

4. Method for operating a refrigerant circuit (1) according to one of the preceding patent claims, wherein the refrigerant circuit (1) is operated at least in a first operating mode (14), in which the first evaporator (6) and the second evaporator (7) are connected to the compressor (2) via mutually different feed lines (8, 10) at least at certain times; and wherein the refrigerant circuit (1) is operated at least in a second operating mode (16), in which only the second evaporator (7), via the second feed line (10), and the third evaporator (15), via the first feed line (8), are connected to the compressor (2); and wherein the refrigerant circuit (1) is operated in a third operating mode (17), in which the first evaporator (6) and the second evaporator (7), via the second feed line (10), and the third evaporator (15), via the first feed line (8), are connected to the compressor (2).

5. Motor vehicle (18) at least comprising a traction drive (19) and a battery (12) in which electrical energy for driving the traction drive (19) is storable, and also comprising a refrigerant circuit (1) according to one of preceding Patent Claims 1 to 4, wherein the first evaporator (6) is designed to be suitable for cooling the battery (12).

## Revendications

1. Circuit de réfrigérant (1), comprenant au moins un compresseur (2) avec un côté aspiration amont (3) et un côté refoulement aval (4), un condenseur (5), un premier évaporateur (6) et au moins un deuxième évaporateur (7) ; le compresseur (2) étant un compresseur à au moins deux étages qui présente, du côté aspiration (3), une première conduite d'alimentation (8) menant à un premier étage (9) du compresseur (2) avec un premier niveau de pression et une deuxième conduite d'alimentation (10) menant à un deuxième étage (11) du compresseur (2) avec un deuxième niveau de pression, le deuxième niveau de pression étant plus élevé que le premier niveau de pression ; le premier évaporateur (6) et le deuxième évaporateur (7) sont aptes à être connectés au moins temporairement au compresseur (2) par des conduites d'alimentation (8, 10) différentes l'une de l'autre ; le premier évaporateur (6) étant utilisé pour refroidir une batterie (12) et le deuxième évaporateur (7) étant utilisé pour refroidir de l'air (13) ; **caractérisé par**
un troisième évaporateur (15) qui est utilisé pour refroidir de façon supplémentaire l'air (13) refroidi par le deuxième évaporateur (7) ; dans un premier état de fonctionnement (14) du circuit de réfrigérant (1), le premier évaporateur (5) est connecté au compresseur (2) par la deuxième conduite d'alimentation (10) et le deuxième évaporateur (7) par la première conduite d'alimentation (8) ; dans un deuxième état de fonctionnement (16) du circuit de réfrigérant (1), seul le deuxième évaporateur (7) est connecté au compresseur (2) par la deuxième conduite d'alimentation (10) et le troisième évaporateur (15) est relié au compresseur (2) par la première conduite d'alimentation (8) ; dans un troisième état de fonctionnement (17) du circuit de réfrigérant (1), le premier évaporateur (6) et le deuxième évaporateur (7) sont connectés au compresseur (2) par la deuxième conduite d'alimentation (10) et le troisième évaporateur (15) par la première conduite d'alimentation (8).

2. Circuit de réfrigérant (1) selon la revendication 1, dans lequel les évaporateurs (6, 7, 15) sont connectés en parallèle les uns avec les autres.

3. Circuit de réfrigérant (1) selon l'une des revendications précédentes, dans lequel le deuxième évaporateur (7) et le troisième évaporateur (15) sont connectés en parallèle l'un à l'autre et sont aptes à être connectés de manière commutable au compresseur (2) par l'intermédiaire de chacune parmi la première conduite d'alimentation (8) et la deuxième conduite d'alimentation (10) .

4. Procédé d'exploitation d'un circuit de réfrigérant (1) selon l'une des revendications précédentes, dans lequel le circuit de réfrigérant (1) est exploité au moins dans un premier état de fonctionnement (14) dans lequel le premier évaporateur (6) et le deuxième évaporateur (7) sont reliés au compresseur (2) au moins temporairement par des conduites d'alimentation (8, 10) différentes l'une de l'autre ; et le circuit de réfrigérant (1) étant exploité au moins dans un deuxième état de fonctionnement (16) dans lequel seul le deuxième évaporateur (7) est connecté au compresseur (2) par la deuxième conduite d'alimentation (10) et le troisième évaporateur (15) par la première conduite d'alimentation (8) ; et le circuit de réfrigérant (1) fonctionne dans un troisième état de fonctionnement (17) dans lequel le premier évaporateur (6) et le deuxième évaporateur (7) sont connectés au compresseur (2) via la deuxième conduite d'alimentation (10) et le troisième évaporateur (15) via la première conduite d'alimentation (8).

5. Véhicule automobile (18), comprenant au moins un entraînement de traction (19) et une batterie (12) dans laquelle de l'énergie électrique est apte à être stockée pour l'entraînement de l'entraînement de traction (19), ainsi qu'un circuit de réfrigérant (1) selon l'une des revendications 1 à 4 précédentes, le premier évaporateur (6) étant réalisé de manière appropriée pour refroidir la batterie (12).
